# EUROPEAN PATENT SPECIFICATION

(11) **EP 0 219 329 B1**
(45) Date of publication and mention of the grant of the patent: **27.01.1993**
(21) Application number: 86307867.1
(22) Date of filing: 10.10.1986
(51) Int. Cl.: B32B 27/30, B32B 31/30

(54) **High oxygen barrier coextruded film**
Koextrudierter Sauerstoffsperrfilm
Pellicule coextrudée imperméable à l'oxygène

(30) Priority: 11.10.1985 US 786930
(43) Date of publication of application: 22.04.1987
(73) Proprietor: W.R. Grace & Co.-Conn., New York, New York 10036 (US)
(72) Inventor: Schirmer, Henry George, South Carolina 29302 (US)
(74) Representative: Collier, Jeremy Austin Grey

(56) References cited:
- EP-A- 0 196 798
- FR-A- 2 341 433
- GB-A- 1 591 424

## Description

This invention relates to a thermoplastic coextruded film which provides a high oxygen barrier.

It is well known that ethylene vinyl alcohol copolymer (EVOH) may act as an oxygen barrier in multi-layer films. It is also recognized that vinylidene chloride copolymers, commonly known as "Saran", may also exhibit oxygen barrier characteristics in a multi-layer film. However, the characteristics of these barrier materials are such that their effectiveness as oxygen barriers is affected by the humidity of the environment in which the film is used, i.e., the barrier properties of these barrier materials are humidity sensitive.

The article Ethylene Vinyl Alcohol Resins for Gas-Barrier Material by T. Iwanami and Y. Hirai discusses the humidity dependence of ethylene vinyl alcohol in estimating its gas-barrier properties. Ethylene vinyl alcohol has good gas-barrier properties, including oxygen barrier properties in low-humidity conditions, but these properties degrade at high humidity.

On the other hand, "Saran" typically exhibits better oxygen barrier properties at high humidity conditions than at low humidity conditions.

It would therefore be beneficial to provide a film which is relatively insensitive to humidity variations in providing high oxygen barrier properties.

It would also be beneficial to provide such a film in which the film may be coextruded with the barrier materials. A problem to be overcome in the coextrusion of both "Saran" and ethylene vinyl alcohol copolymer in a single coextruded film is the widely dissimilar extrusion temperatures of these respective materials. "Saran" has a typical extrusion temperature of about 320° F (160° C), in contrast to ethylene vinyl alcohol copolymer with an extrusion temperature of typically about 450° F (232° C). Nethertheless, if these materials can be coextruded together in a single coextruded film the resulting film would benefit not only from the combination of oxygen barrier materials having different humidity-related barrier characteristics, but the advantages of producing such a film in a coextrusion process with its attendant economies of production.

Of interest is U.K. Patent Application GB 2 014 476 (Kuga et al) which discloses a substrate of polyvinyl alcohol coated on one or both sides with an aqueous dispersion of vinylidene chloride vinyl chloride copolymer.

EP-A-0 196 798 discloses a high oxygen barrier thermoplastic composite film which comprises a combination of ethylene vinyl alcohol copolymer and vinylidene chloride copolymer but in separate component films which make up the composite film. The separate component films are joined together, for example, by corona bonding. This document forms part of the state of the art in relation to the present application by virtue of its earlier priority date.

The present invention provides a coextruded thermoplastic film having high oxygen barrier characteristics over a wide range of humidity conditions.

The terms "acid- or acid anhydride-modified polymeric materials" and the like, as used herein, refer to materials suitable for use as adhesives and which preferably include a graft copolymer of a polyolefin, such as polyethylene, or ethylene-ester copolymer substrate and an unsaturated carboxylic acid or acid anhydride, blended with a polyolefin, such as polyethylene, or ethylene-ester copolymer.

The term "ethylene vinyl acetate copolymer" as used herein refers to a copolymer formed from ethylene and vinyl acetate monomers wherein the ethylene derived units in the copolymer are present in major amounts, generally from about 60% to 98% by weight, and the vinyl acetate derived units in the copolymer are present in minor amounts, generally from about 2% to 40% by weight.

The terms "vinylidene chloride copolymer", "Saran", and the like refer to a comonomer of vinylidene chloride polymerized with other unsaturated compounds such as various acrylates, nitriles, and vinyl chloride.

The terms "ethylene vinyl alcohol copolymer" and the like refer to saponified or hydrolyzed ethylene vinyl acetate compolymer.

In accordance with the present invention, there is provided a coextruded multi-layer thermoplastic film comprising a layer comprising vinylidene chloride copolymer, a layer comprising ethylene vinyl alcohol copolymer and an intermediate layer disposed between said vinylidene chloride copolymer and ethylene vinyl alcohol copolymer layers and comprising an adhesive polymeric material.

A preferred embodiment includes a first layer comprising a copolymer of ethylene, a second layer comprising a copolymer of ethylene; a third or barrier layer comprising vinylidene chloride copolymer; a fourth layer comprising an adhesive polymeric material, eg an acid- or acid anhydride-modified polymeric material; a fifth or barrier layer comprising ethylene vinyl alcohol copolymer; a sixth layer comprising an adhesive polymeric material, eg an acid- or acid anhydride-modified polymeric material; and a seventh layer comprising a copolymer of ethylene.

In the accompanying drawings,
FIG. 1 is a schematic cross section of a coextruded film of the invention; and
FIG. 2 is a schematic cross section of an alternative embodiment of a coextruded film of the invention.

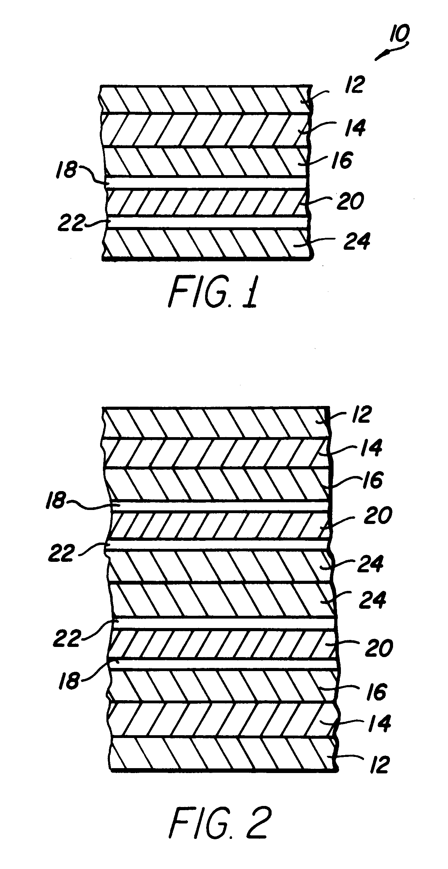

Figure 1. shows a schematic cross-section of the coextruded film 10 of the invention.

First layer 12 of figure 1 is preferably an ethylene vinyl acetate copolymer (EVA), more preferably an EVA with a vinyl acetate content of between about 2% and 8% by weight, and even more preferably an EVA with a vinyl acetate content of between about 2% and 5% vinyl acetate content by weight. A commercial example of an EVA suitable for first layer 12 is Exxon 32.89 EVA, with a vinyl acetate content of about 4.5% by weight. The use of EVA in first layer 12 of figure 1 is especially advantageous in obtaining a softer film with lower sealing temperatures. Nevertheless, other polymeric materials may also be suitable for first layer 12, including polyolefins such as polyethylene. Polypropylene is particularly suitable for use in connection with autoclavable films where higher seal strengths are needed.

The second layer 14 is also preferably an EVA, more preferably an EVA with a vinyl acetate content of between about 10% and 30%, by weight, and even more preferably an EVA with a vinyl acetate content of between 17% and 18% by weight, such as Alathon 3170 available from DuPont.

The third or barrier layer 16 is a copolymer of vinylidene chloride, such as vinylidene chloride vinyl chloride copolymer (commonly known as "Saran"). A suitable commercial resin is PV864 (Solvay) which is a vinylidene chloride copolymer with a low viscosity and low molecular weight, and without plasticizers normally included in "Saran". PV858 (Solvay) is a similar resin with a smaller particle size than PV864. These resins have a relative viscosity of about 1.32, and a melt viscosity of about 750 pascals at 100 reciprocal seconds and 170°C.

The fourth layer 18 is an acid or acid anhydride-modified polymeric material which can bond the third or barrier layers 16 to the fifth or barrier layer 20 comprising ethylene vinyl alcohol copolymer. Several commercial adhesives are available for fourth layer 18, including CXA-162 available from DuPont. This is a blend of an ethylene vinyl acetate copolymer with 18 percent by weight vinyl acetate comonomer, with a maleic acid grafted polyolefin. This material has a melt index of 0.8, a density of 0.926 grams per cubic centimeter, a melting point of 85°C and a freezing point of 67°C (DSC). Other anhydride modified polymeric materials are available from Norchem under the designation Plexar, and from Mitsui under the designation Admer. Various carboxylic acids and acid anhydrides are used as the grafting agent in such graft copolymers. The graft copolymer generally forms less than half the adhesive material. The sixth layer 22 is preferably similar to fourth layer 18.

The fifth or barrier layer 20 comprises EVOH, such as EVAL-EC-F101 (Eval Co.), and ethylene vinyl alcohol copolymer. It has a relatively low ethylene content of 32 mole percent, a melt index of 1.3 grams per 10 minutes (190°C, 2160 grams), and a melting point of 181°C. EVOH resins with higher ethylene contents have generally lower oxygen barrier properties.

Seventh layer 24 is preferably ethylene vinyl acetate copolymer, and more preferably an EVA with a relatively high vinyl acetate content, about 20-40% vinyl acetate by weight. A suitable EVA is Elvax 250 available from DuPont, with a vinyl acetate content of about 28% by weight. The relatively high vinyl acetate EVA used in the seventh layer 24 facilitates internal welding in embodiments where the tubular coextruded film is adhered to a double lay-flat configuration after passing through nip rolls. Such a "double wound" film would in the case of the preferred embodiment result in the EVA with relatively high vinyl acetate percent adhered to a like layer on the inside surface of the tubular film.

Such a double wound film is depicted in figure 2 in schematic fashion. Coextruded film 10 of figure 1 is extruded as a tubular film, and subsequently passed through nip rolls or other suitable gathering means to press adjacent film surfaces 24 together. This double wound film structure in accordance with the present invention has the advantage of providing four separate barrier layers, two of which comprise a vinylidene chloride copolymer and two of which comprise ethylene vinyl alcohol copolymer in a single structure produced by coextrusion of a tubular film.

Seventh layer 24 may also comprise polyolefins, including polyethylene and polypropylene.

According to a feature of the invention, a coextruded multilayer thermoplastic film is produced by
(a) coextruding an ethylene vinyl alcohol copolymer, a vinylidene chloride copolymer, and an intermediate layer of adhesive polymeric material;
(b) forming the ethylene vinyl alcohol copolymer into an annular shape at a first temperature;
(c) forming the vinylidene chloride copolymer into an annular shape at a second temperature considerably lower than the first temperature; and
(d) cooling the coextruded film.
The first temperature is preferably 380°F to 420°F (193°C-216°C), especially about 400°F (204°C), and the second temperature is preferably 280°F to 320°F (138°C to 160°C) especially about 300°F (149°C).

Preferably the ethylene vinyl alcohol copolymer, vinylidene chloride copolymer and intermediate layer of adhesive polymeric material are simultaneously coextruded through the single coextrusion die, and they may also be formed into an annular shape at substantially the same time.

The advantages of providing a coextruded tubular film in accordance with the present invention are further demonstrated by reference to the examples provided below of physical properties determined from sample films.

### EXAMPLE 1

A film was prepared which had the following structure: EVA (EXXON 32.89)/EVA (Alathon 3170)/Saran (PV 864)/CXA-162/EVOH (EVAL EC-F101)/CXA-162/EVA (ELVAX 250).

Three samples had an average thickness of 2.23 mils (0.057 mm) (double wound), i.e. a single wall thickness of 1.12 mils (0.028 mm) thick. The third or barrier layers of saran of the double wound film together averaged .23 mils (0.0058 mm) thick; the fifth or barrier layers of EVOH of the double wound film together averaged .14 mils (0.0036 mm) thick.

The film was coextruded with the use of a thermally insulated "Saran" section of a coextrusion die. An insulating agent was used to insulate the saran (extrusion temperature of 320°F (160°C)) from higher surrounding temperatures of the die. The ethylene vinyl alcohol copolymer and saran were simultaneously coextruded through the coextrusion die, and were formed into an annular shape at substantially the same time. The "Saran" is thus formed into an annular shape at about 300°F (149°C) instead of about 400°F (204°C) (EVOH has an extrusion temperature of about 450°F (232°C)). Thus, the saran only encounters the 400°F (204°C) melt temperature for a brief period of time after contact with the adjacent melt. The film was then passed through conventional cooling means and gathered on a take-up roll.

Oxygen transmission at 73°F (23°C) 0% relative humidity was 1.3 cm³ (ccstp)/(24 hours, square meter, atmosphere (10⁵Pa). Oxygen transmission at 73°F (23°C) 100% relative humidity was 22.6 cm³ (ccstp)/(24 hours, square meter, atmosphere (10⁵Pa)).

### EXAMPLE 2

A film similar to the composition of example 1, but with an overall average thickness (three samples) of 1.88 mils (0.048mm) (double wound), i.e. a single wall thickness of .94 mils (0.024 mm) was coextruded into a tubular film. The average total thickness of the saran layers was .26 mils (0.0066 mm); the EVOH averaged .16 mils (0.0041mm).

Oxygen transmission at 73°F (23°C), 0% relative humidity was 1.7 cm³ (ccstp)/(24 hours, square meter, atmosphere(10⁵Pa)). Oxygen transmission at 73°F (23°C), 100% relative humidity was 1.7 cm³ (ccstp)/(24 hours, square meters, atmosphere (10⁵Pa).

### EXAMPLE 3

A film with a composition similar to examples 1 and 2 above was made, with an overall total thickness of 2.11 mils (0.054mm) (double wound), i.e. a single wall thickness of 1.05 mils (0.027mm). The total saran thickness averaged .38 mils (0.00965 mm) (three samples); the total EVOH thickness averaged .29 mils (0.0074 mm).

Oxygen transmission at 73°F (23°C), 0% relative humidity was 1.4 cm³ (ccstp)/(24 hours, square meter, atmosphere). At 100% relative humidity, the oxygen transmission was .2 cm³ (ccstp)/(24 hours, square meter, atmosphere (10⁵Pa)).

The test methodology of ASTM D 3985 is followed for determining oxygen transmission rates at 73°F (23°C), 0% relative humidity. At 100% relative humidity, the "sandwich" method discussed in ASTM Journal of Testing and Evaluation, volume 12, number 3, May 1984, at pages 149-151 was utilized. Testing is performed on OX-TRAN oxygen permeability testing equipment. Thicknesses of the "Saran" and EVOH layers were measured optically.

Coextruded films made in accordance with the present invention are suitable for example in making shelf stable food packages, and particularly have a potential use in long term storage for food products.

The terms "Saran", "Alathon", "Elvax", "Plexar" and "Admer", used in this specification, are Trade Marks.

## Claims

1. A coextruded, multi-layer thermoplastic film comprising
a) a layer comprising vinylidene chloride copolymer
b) a layer comprising ethylene vinyl alcohol copolymer; and
c) an intermediate layer, disposed between said vinylidene chloride copolymer and ethylene vinyl alcohol layers, and comprising an adhesive polymeric material.

2. A film according to claim 1 in which
a) two further layers are disposed on the respective surfaces of the vinylidene chloride copolymer and ethylene vinyl alcohol copolymer layers opposite said intermediate layer, either of said further layers comprising an adhesive polymeric material, and the other of said further layers comprising a copolymer of ethylene; and
b) two outer layers disposed on the outside of said two further layers, said outer layers selected from the group consisting of polyolefins and copolymers of ethylene.

3. A film according to claim 1 comprising
a) a first layer comprising a copolymer of ethylene;
b) a second layer comprising a copolymer of ethylene;
c) a third or barrier layer comprising vinylidene chloride copolymer;
d) a fourth layer comprising an adhesive polymeric material;
e) a fifth or barrier layer comprising ethylene vinyl alcohol copolymer;
f) a sixth layer comprising an adhesive polymeric material; and
g) a seventh layer comprising a copolymer of ethylene.

4. A film according to claim 2 or 3 wherein a said copolymer of ethylene comprises ethylene vinyl acetate copolymer.

5. A film according to claim 3 wherein the first layer is a layer of an ethylene vinyl acetate copolymer having a vinyl acetate content of about 2% to 8% by weight, preferably about 2 to about 5% by weight.

6. A film according to claim 3 or 5 wherein the second layer is a layer of an ethylene vinyl acetate copolymer having a vinyl acetate content of about 10% to about 30% by weight, preferably about 17% to 18% by weight.

7. A film according to claim 3, 5 or 6 wherein the seventh layer is a layer of ethylene vinyl acetate copolymer having a vinyl acetate content of about 20% to 40% by weight, preferably about 28% by weight.

8. A film according to any of claims 1 to 7 wherein the adhesive polymeric material comprises an acid- or acid anhydride-modified polymeric material.

9. A film according to claim 8 wherein the acid- or acid-anhydride-modified polymeric material comprises an acid-or acid anhydride-modified ethylene vinyl acetate copolymer.

10. A film according to any of claims 1 to 9 wherein the vinylidene chloride copolymer comprises vinylidene chloride vinyl chloride copolymer.

11. A film according to any of claims 1 to 10 wherein the said film is a lay-flat tubular film having its interior lay-flat surfaces welded together.

12. A method of producing a coextruded multilayer thermoplastic film comprising:
a) coextruding an ethylene vinyl alcohol copolymer, a vinylidene chloride copolyer, and an intermediate layer of adhesive polymeric material;
b) forming the ethylene vinyl alcohol copolymer into an annular shape at a first temperature;
c) forming the vinylidene chloride copolymer into an annular shape at a second temperature considerably lower than the first temperature; and
d) cooling the coextruded film

13. A method according to claim 12 wherein the first temperature is about 380°F (193°C) to 420°F (216°C).

14. The method according to claim 12 or 13 wherein the second temperature is 280°F (138°C) to 320°F (160°C).

15. A method according to any of claims 12 to 14 wherein the ethylene vinyl alcohol copolymer and vinylidene chloride copolymer are simultaneously coextruded through a single coextrusion die.

16. A method according to any of claims 12 to 15 wherein the ethylene vinyl alcohol copolymer and vinylidene chloride copolymer are formed into an annular shape at substantially the same time.

## Patentansprüche

1. Koextrudierte, thermoplastische Mehrschichtfolie, die
(a) eine Vinylidenchloridcopolymer umfassende Schicht,
(b) eine Ethylen/Vinylalkohol-Copolymer umfassende Schicht und
c) eine Zwischenschicht umfaßt, die zwischen den Vinylidenchloridcopolymer-und Ethylen/Vinylalkohol-Schichten angeordnet ist und ein klebriges, polymeres Material umfaßt.

2. Folie nach Anspruch 1, bei der
(a) auf den jeweiligen Oberflächen der Vinylidenchloridcopolymer-und Ethylen/Vinylalkohol-Copolymerschichten, die der Zwischenschicht gegenüberliegen, zwei weitere Schichten angeordnet sind, wobei eine der beiden weiteren Schichten ein klebriges, polymeres Material umfaßt und die andere der beiden weiteren Schichten ein Ethylencopolymer umfaßt, und
(b) auf der Außenseite dieser beiden weiteren Schichten zwei äußere Schichten angeordnet sind, wobei die äußeren Schichten ausgewählt sind aus der Gruppe bestehend aus Polyolefinen und Ethylencopolymeren.

3. Folie nach Anspruch 1, die
(a) eine Ethylencopolymer umfassende erste Schicht,
(b) eine Ethylencopolymer umfassende zweite Schicht,
(c) eine Vinylidenchloridcopolymer umfassende dritte oder Sperrschicht,
(d) eine klebriges, polymeres Material umfassende vierte Schicht,
(e) eine Ethylen/Vinylalkohol-Copolymer umfassende fünfte oder Sperrschicht,
(f) eine klebriges, polymeres Material umfassende sechste Schicht und
(g) eine Ethylencopolymer umfassende siebte Schicht umfaßt.

4. Folie nach Anspruch 2 oder 3, bei der das Ethylencopolymer Ethylen/Vinylacetat-Copolymer umfaßt.

5. Folie nach Anspruch 3, bei der die erste Schicht eine Schicht aus Ethylen/Vinylacetat-Copolymer mit einem Vinylacetatgehalt von etwa 2 bis 8 Gew.-%, vorzugsweise etwa 2 bis etwa 3 Gew.-% ist.

6. Folie nach Anspruch 3 oder 5, bei der die zweite Schicht eine Schicht aus Ethylen/Vinylacetat-Copolymer mit einem Vinylacetatgehalt von etwa 10 bis etwa 30 Gew.-%, vorzugsweise etwa 17 bis 18 Gew.-% ist.

7. Folie nach Anspruch 3, 5 oder 6, bei der die siebte Schicht eine Schicht aus Ethylen/Vinylacetat-Copolymer mit einem Vinylacetatgehalt von etwa 20 bis 40 Gew.-%, vorzugsweise etwa 28 Gew.-% ist.

8. Folie nach einem der Ansprüche 1 bis 7, bei der das klebrige, polymere Material ein Säure- oder Säueanhydrid-modifiziertes, polymeres Material umfaßt.

9. Folie nach Anspruch 8, bei der das Säure- oder Säureanhydrid-modifizierte, polymere Material ein Säure- oder Säureanhydrid-modifiziertes Ethylen/Vinylacetat-Copolymer umfaßt.

10. Folie nach einem der Ansprüche 1 bis 9, bei der das Vinylidenchloridcopolymer Vinylidenchlorid/Vinylchlorid-Copolymer umfaßt.

11. Folie nach einem der Ansprüche 1 bis 10, bei der die Folie eine flach liegende Schlauchfolie ist, deren inneren, flach liegenden Oberflächen miteinander verschweißt sind.

12. Verfahren zur Herstellung einer koextrudierten, thermoplastischen Mehrschichtfolie, bei dem:
(a) ein Ethylen/Vinylalkohol-Copolymer, ein Vinylidenchloridcopolymer und eine Zwischenschicht aus klebrigem, polymerem Material koextrudiert werden,
(b) das Ethylen/Vinylalkohol-Copolymer bei einer ersten Temperatur zu einer ringförmigen Gestalt geformt wird,
(c) das Vinylidenchloridcopolymer bei einer zweiten Temperatur, die beträchtlich niedriger ist als die erste Temperatur, zu einer ringförmigen Gestalt geformt wird und
(d) die koextrudierte Folie gekühlt wird.

13. Verfahren nach Anspruch 12, bei dem die erste Temperatur etwa 193°C (380°F) bis 216°C (420°F) beträgt.

14. Verfahren nach Anspruch 12 oder 13, bei dem die zweite Temperatur 138°C (280°F) bis 160°C (320°F) beträgt.

15. Verfahren nach einem der Ansprüche 12 bis 14, bei dem das Ethylen/Vinylalkohol-Copolymer und das Vinylidenchloridcopolymer gleichzeitig durch eine einzige Koextrusionsdüse koextrudiert werden.

16. Verfahren nach einem der Ansprüche 12 bis 15, bei dem das Ethylen/Vinylalkohol-Copolymer und das Vinylidenchloridcopolymer im wesentlichen gleichzeitig zu einer ringförmigen Gestalt geformt werden.

## Revendications

1. Pellicule thermoplastique multicouches produite par co-extrusion, comprenant
a) une couche comprenant un copolymère de chlorure de vinylidène
b) une couche comprenant un copolymère d'éthylène vinyl alcool; et
c) une couche intermédiaire disposée entre lesdites couches en copolymère de chlorure de vinylidène et d'éthylène vinyl alcool, et comprenant une matière polymère adhésive.

2. Pellicule selon la revendication 1, dans laquelle
a) deux couches supplémentaires sont disposées sur les surfaces respectives des couches en copolymère de chlorure de vinylidène et d'éthylène vinyl alcool opposées à ladite couche intermédiaire, l'une ou l'autre desdites couches supplémentaires comprenant une matière copolymère adhésive, et l'autre desdites couches supplémentaires comprenant un copolymère d'éthylène; et
b) les deux couches extérieures disposées sur l'extérieur desdites deux couches supplémentaires, lesdites couches extérieures étant choisies dans le groupe comprenant des polyoléfines et copolymères d'éthylène.

3. Pellicule selon la revendication 1, comprenant
a) une première couche comprenant un copolymère d'éthylène;
b) une deuxième couche comprenant un copolymère d'éthylène;
c) une troisième couche ou couche formant barrière comprenant un copolymère de chlorure de vinylidène;
d) une quatrième couche comprenant une matière polymère adhésive;
e) une cinquième couche ou couche formant barrière comprenant un copolymère d'éthylène vinyl alcool;
f) une sixième couche comprenant une matière polymère adhésive; et
g) une septième couche comprenant un copolymère d'éthylène.

4. Pellicule selon la revendication 2 ou 3, dans laquelle ledit copolymère d'éthylène comprend un copolymère d'éthylène vinyl acétate.

5. Pellicule selon la revendication 3, dans laquelle la première couche est une couche en copolymère d'éthylène vinyl acétate ayant une teneur en acétate vinylique d'environ 2% à 8% en poids, de préférence d'environ 2 à 5% en poids.

6. Pellicule selon la revendication 3 ou 5, dans laquelle la deuxième couche est une couche en un copolymère d'éthylène vinyl acétate ayant une teneur en vinyl acétate d'à peu près 10% à 30% en poids, de préférence d'environ 17% à 18% en poids.

7. Pellicule selon la revendication 3, 5 ou 6, dans laquelle la septième couche est une couche en un copolymère d'éthylène vinyl acétate ayant une teneur en acétate vinylique d'environ 20% à 40% en poids, de préférence d'environ 28% en poids.

8. Pellicule selon l'une des revendications 1 à 7, dans laquelle la matière polymère adhésive comprend une matière polymère modifiée par un acide ou un acide anhydride.

9. Pellicule selon la revendication 8, dans laquelle la matière polymère modifiée par un acide ou un acide anhydride comprend un copolymère d'éthylène vinyl acétate modifié par un acide ou un acide anhydride.

10. Pellicule selon l'une des revendications 1 à 9, dans laquelle le copolymère en chlorure de vinylidène comprend un copolymère de chlorure de vinyl de chlorure de vinylidène.

11. Pellicule selon l'une des revendications 1 à 10, dans laquelle ladite pellicule est une pellicule tubulaire posée à plat dont les surfaces internes posées à plat sont soudées ensemble.

12. Procédé de fabrication d'une pellicule thermoplastique multicouches produite par co-extrusion comprenant les étapes consistant à :
a) co-extruder un copolymère d'éthylène vinyl alcool, un copolymère de chlorure de vinylidène et une couche intermédiaire en matière polymère adhésive;
b) former le copolymère d'éthylène vinyl alcool en une configuration annulaire à une première température;
c) former le copolymère de chlorure de vinylidène en une configuration annulaire à une deuxième température considérablement inférieure à la première température; et
d) refroidir la pellicule co-extrudée.

13. Procédé selon la revendication 12, dans lequel la première température est comprise environ entre 380°F (193°C) et 420°F (216°C).

14. Procédé selon la revendication 12 ou 13, dans lequel la deuxième température est comprise entre 280°F (138°C) et 320°F (160°C).

15. Procédé selon l'une des revendications 12 à 14, dans lequel le copolymère d'éthylène vinyl alcool et le copolymère de chlorure de vinylidène sont co-extrudés simultanément à travers une seule matrice de co-extrusion.

16. Procédé selon l'une des revendications 12 à 15, dans lequel le copolymère d'éthylène vinyl alcool et le copolymère de chlorure de vinylidène sont configurés en une forme annulaire essentiellement en même temps.
